# EUROPEAN PATENT SPECIFICATION

(11) **EP 3 869 134 B1**
(45) Date of publication and mention of the grant of the patent: **18.09.2024**
(21) Application number: 18937409.3
(22) Date of filing: 02.12.2018
(51) Int. Cl.: F28B 1/02

(54) **NUCLEAR POWER PLANT**
KERNKRAFTWERK
CENTRALE NUCLÉAIRE

(30) Priority: 17.10.2018 CN 201811212384
(43) Date of publication of application: 25.08.2021
(73) Proprietor: China Nuclear Power Engineering Co., Ltd., Shenzhen, Guangdong 518124 (CN); China General Nuclear Power Group, Shenzhen, Guangdong 518031 (CN); CGN Power Co., Ltd., Shenzhen City, Guangdong 518031 (CN)
(72) Inventor: LIANG, Xiaolong, Guangdong 518124 (CN); NIE, Chenglei, Guangdong 518124 (CN); ZHOU, Peng, Guangdong 518124 (CN); OU, Guoyong, Guangdong 518124 (CN); LI, Chaolian, Guangdong 518124 (CN); LI, Mingyang, Guangdong 518124 (CN)
(74) Representative: Greaves Brewster LLP
(86) International application number: PCT/CN2018/118804
(87) International publication number: WO 2020/077757

(56) References cited:
- CN-A- 1 884 953
- CN-A- 101 256 043
- CN-A- 103 267 423
- CN-U- 202 948 740
- CN-U- 203 024 614
- CN-U- 203 550 643
- CN-U- 203 550 643
- CN-U- 206 037 737
- CN-Y- 201 335 611
- JP-A- 2010 007 873
- JP-A- H04 187 997
- JP-A- S6 237 696

## Description

### FIELD OF THE INVENTION

The present invention generally relates to a nuclear power plant comprising a passive condenser. Document CN 103267423 discloses a nuclear plant comprising a passive condenser with an upper collecting tube and a lower collecting tube.

### BACKGROUND OF THE INVENTION

Core cooling, decay waste heat and containment cooling of a conventional active nuclear power plant all rely on external power sources. When the entire nuclear power plant is powered off, the above-mentioned heat cannot be conducted out of the containment, which may lead to serious safety accidents. After the Fukushima nuclear accident, passive containment heat removal systems have been extensively studied and applied.

A passive containment heat removal system includes evaporator, condenser, cooling water tank, rising tube, dropping tube and gas collector. As the core equipment of the system, the condenser plays a key role in the realization of the system's function.

A conventional passive condenser adopts a tube bundle-tube sheet-spherical head structure, which requires the heat exchange tube and the tube sheet to be welded and swelled one by one after the tube sheet is drilled. After welding, surface welding seam is non-destructively tested one by one. The spherical head is welded to the tube sheet and in order to facilitate the subsequent maintenance, a manhole must be provided on the spherical head. Tube sheets and spherical heads are often thick, so as to meet the strength requirements. Generally, six circumferential welds are required. Tube sheets and the spherical heads are processed by forgings, which makes the processing technology more complicated and expensive. After the heat exchange tube and the tube sheet are welded, 100% radiographic inspection cannot be carried out. In addition, the spherical head defines a large opening, the flange seal is easy to leak, and there is a sudden change in force.

In view of the foregoing, what is needed therefore is to provide a passive condenser for a nuclear power plant which can make the opening of the containment as small as possible, can ensure the integrity of the containment to the greatest extent, and can perform 100% radiographic inspection.

### SUMMARY OF THE INVENTION

One object of the present invention is to overcome the disadvantages of the prior art and provide a passive condenser for a nuclear power plant which can make the opening of the containment as small as possible, can ensure the integrity of the containment to the greatest extent, and can perform 100% radiographic inspection.

A nuclear power plant according to the invention comprises the features of claim 1.

According to one aspect of the present invention, the first flanges are welded to the upper collecting tube in a saddle way, and the second flanges are welded to the lower collecting tube in a saddle way.

According to one aspect of the present invention, the upper inclined section is fixedly connected to the first flange by butt welding, and the the lower inclined section is fixedly connected to the second flange by butt welding.

According to one aspect of the present invention, the upper collecting tube and the lower collecting tube each has a cylindrical structure.

According to one aspect of the present invention, the first connector and the second connector each has a large head and a small head.

According to one aspect of the present invention, the heat exchange tube bundle is a C-shaped vertical heat exchange tube bundle.

According to one aspect of the present invention, an angle between the upper inclined section of the heat exchange tube and a horizontal plane is 3-15 degree, and an angle between the lower inclined section of the heat exchange tube and the horizontal plane is 3-15 degree.

According to one aspect of the present invention, the passive condenser further includes a frame assembly for supporting and fixing the upper collecting tube and the lower collecting tube.

According to one aspect of the present invention, the frame assembly is welded with a tube bundle support assembly for fixing and supporting the upper inclined section and the lower inclined section of the heat exchange tube bundle, respectively.

According to one aspect of the present invention, the closed structure of the upper collecting tube and the lower collecting tube is a welded hemispherical head.

According to one aspect of the present invention, the middle connecting section is a vertical section.

Compared with the prior art, the passive condenser for a nuclear power plant of the present invention has the following advantages:
1) No tube sheet and spherical head are needed. The collecting tube realizes the functions of tube sheet and the spherical head. The collecting tube has a cylindrical structure with uniform stress, few circumferential welds, simple and reliable processing technology, and the forging of the conventional head and the tube sheet are eliminated, thereby reducing the manufacturing cost.
2) The first flange and the second flange are welded to the corresponding collecting tube in a saddle way and the heat exchange tube is welded to the flange. Therefore, the welds can be 100% radiographically inspected, which improves the safety performance of the equipment.
3) The interface connected to the external equipment is small, which reduces the installation holes in the containment and ensures the integrity of the containment to the greatest extent.

### BRIEF DESCRIPTION OF THE DRAWINGS

The passive condenser for a nuclear power plant of the present invention will be described in detail below with reference to the accompanying drawings, in which:
Fig. 1 is a perspective veiw of a passive condenser for a nuclear power plant according to one embodiment of the present invention;
Fig. 2 is a left side view of the passive condenser for a nuclear power plant shown in Fig. 1; and
Fig. 3 is an enlarged view of the first flange of the upper collecting tube of the passive condenser for a nuclear power plant according to one embodiment of the present invention.
8--containment; 10--upper collecting tube; 100--heat exchange tube steam inlet; 102--first connector; 104--hemispherical head; 12--first flange; 120--first through hole; 20--lower collecting tube; 22--second flange; 202--second connector; 204--hemispherical head; 30--heat exchange tube; 300--upper inclined section; 302--middle connecting section; 304--lower inclined section; 40--frame assembly; 400--bracket; 401--curved backing plate; 402--bracket; 50, 60--tube bundle support assembly.

### DETAILED DESCRIPTION OF THE INVENTION

In order to make the objective, technical solutions and effects of the present invention clearer, the present invention will be further described in detail below in conjunction with accompanying drawings and embodiments. It should be understood that the embodiments described herein are only for explaining the present invention, not for limiting the scope of the present invention.

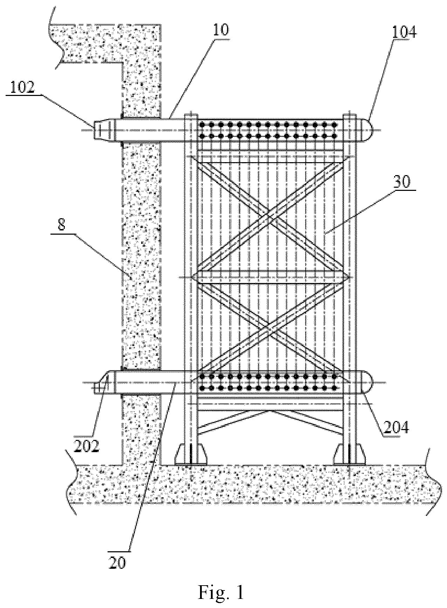

Referring to Figs. 1 to 3, a passive condenser for a nuclear power plant according to one embodiment of the present invention includes:
an upper collecting tube 10 defining a nunmber of heat exchange tube steam inlets 100 and having an opening end and a closed end, and the opening end being fixedly connected to a first connector 102;
first flanges 12 defining first through holes 120 and being arranged at the positions of the heat exchange tube steam inlets 100, the first flanges 12 being fixedly connected to the upper collecting tube 10, with the first through holes 120 being in communication with the heat exchange tube steam inlets 100;
a lower collecting tube 20 defining a number of heat exchange tube condensate return ports (not shown) and having an opening end and a closed end, and the opening end being fixedly connected to a second connector 202;
second flanges 22 defining second through holes (not shown) and being arranged at positions of the heat exchange tube condensate return ports, the second flanges being fixedly connected to the lower collecting tube 20, with the second through holes being in communication with the heat exchange tube condensate return ports; and
a heat exchange tube bundle including a number of heat exchange tubes 30, each of the heat exchange tubes 30 including an upper inclined section 300, a middle connecting section 302 and a lower inclined section 304, the upper inclined section 300 being fixedly connected to the first flange 12, and the lower inclined section 304 being fixedly connected to the second flange 22.

The upper collecting tube 10 is a cylindrical steel tube fixed on the frame assembly 40. The upper collecting tube 10 is evenly provided with a number of heat exchange tube steam inlets 100. The upper collecting tube 10 passes through the openings in the upper part of the containment 8. The opening on the upper part of the containment 8 matches the outer diameter of the upper collecting tube 10, and the outer diameter of the upper collecting tube 10 can be adjusted according to different requirements. The inlet end of the upper collecting tube 10 is welded and fixed with a first connector 102 used for a reducing diameter. The first connector 102 has a small head and a large head. The outer diameter of the inlet end is smaller than the outer diameter of the connecting end of the upper collecting tube 10. By using the first connector 102, it can be quickly connected and fixed with adjacent equipment.

The other end of the upper collecting tube 10 has a closed structure. In the embodiment as illustrated, the other end is welded with a hemispherical head 104 matching the outer diameter of the upper collecting tube 10 for sealing. The upper collecting tube 10, the first connector 102 and the hemispherical head 104 are welded and fixed.

The structure of the lower collecting tube 20 has almost the same structure as that of the upper collecting tube 10. The lower collecting tube 20 is a cylindrical steel tube whose outer diameter can be adjusted according to the requirements of the nuclear power plant. The lower collecting tube 20 is evenly provided with a number of heat exchange pipe condensate return ports (not shown). In order to facilitate the fixed connection of the heat exchange tube 30 with the upper collecting tube 10 and the lower collecting tube 20, the number and position of the heat exchange tube condensate return ports on the lower collecting tube 20 correspond to the number and position of the heat exchange tube steam inlets 100.

The lower collecting tube 20 extends through an opening at the lower part of the containment 8, and the opening at the lower part of the containment 8 matches the outer diameter of the lower collecting tube 20. The outlet end of the lower collecting tube 20 is welded and fixed with a second connector 202 used for reducing diameter. The second connector 202 has a small head and a large head. The outer diameter of the outlet end is smaller than the outer diameter of the connecting end of the lower collecting tube 20. By using the second connector 202, the lower collecting tube 20 can be quickly connect and fix with adjacent equipment.

The other end of the lower collecting tube 20 has a closed structure. In the embodiment as illustrated, the other end is welded with a hemispherical head 204 matching the outer diameter of the lower collecting tube 20 for sealing.

According to the present invention, the upper collecting tube 10 and the lower collecting tube 20 have a cylindrical structure, with fewer circumferential welds, simpler and more reliable processing technology, and remarkably reduced manufacturing costs. The upper collecting tube 10 can effectively buffer and evenly distribute a large amount of inflowing steam. The lower collecting tube 20 can effectively collect and buffer the condensate, and discharge the condensate from the outlet end. Due to the simple cylindrical structures of the upper collecting tube 10 and the lower collecting tube 20, the opening of the containment 8 can be minimized, so as to ensure the integrity of the containment 8 to the utmost extent.

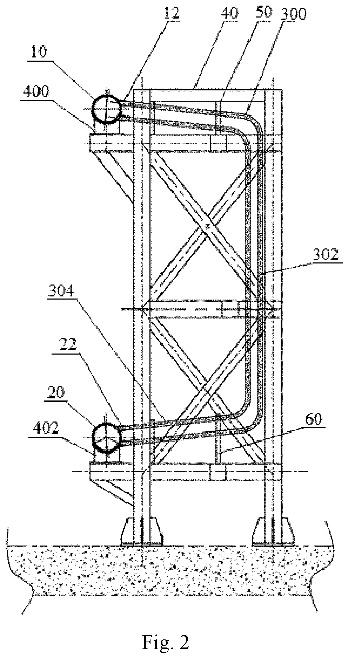

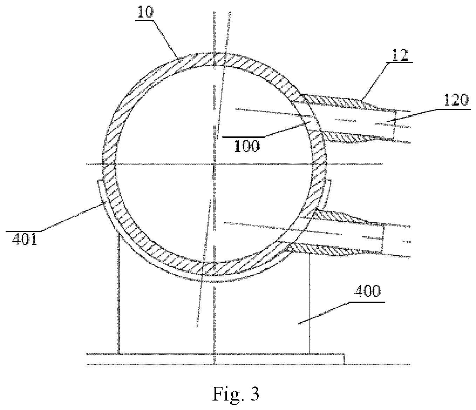

Referring to Figs. 2 and 3, to ensure the connection strength of the upper collecting tube 10 and the heat exchange tube 30, and to ensure that 100% radiographic inspection can be carried out, the first heat exchange tube steam inlet 100 of the upper collecting tube 10 is welded with the first flange 12. The first flange 12 defines first through holes 120 having the same diameter as that of the heat exchange tube steam inlet 100 and communicating with the heat exchange tube steam inlet 100. The first flange 12 is welded to the upper collecting tube 10 in a saddle manner, and the first flange 12 is parallel to the upper inclined section 300 of the heat exchange tube 30 after welding. The end of the first flange 12 away from the upper collecting tube 10 is trimmed, that is, the outer diameter of the end of the first flange 12 away from the upper collecting tube 10 is smaller than the outer diameter of the welding end with the upper collecting tube 10. In order to facilitate welding with the heat exchange tube bundle, the first flange 12 has a certain length, and the first flange 12 and the upper inclined section 300 of the heat exchange tube 30 are welded by butt welding.

In order to ensure the connection strength between the lower collecting tube 20 and the heat exchange tube 30, and to ensure that 100% radiographic inspection can be performed, a second flange 22 is welded to the heat exchange tube condensate return port (not shown) on the lower collecting tube 20. The second flange 22 defines second through holes having the same diameter as that of the heat exchange tube condensate return port (not shown) and communicating with the heat exchange tube condensate return port. The second flange 22 and the lower collecting tube 20 are also welded in a saddle manner, and the second flange 22 is parallel to the lower inclined section 304 of the heat exchange tube 30 after welding. The end of the second flange 22 away from the lower collecting tube 20 is trimmed, that is, the outer diameter of the end of the second flange 22 away from the lower collecting tube 20 is smaller than the outer diameter of the welding end with the lower collecting tube 20. In order to facilitate welding with the heat exchange tube bundle, the second flange 22 has a certain length, and the second flange 22 and the lower inclined section 304 of the heat exchange tube 30 are welded by butt welding.

The first flange 12 and the upper collecting tube 10 are welded in a saddle manner, the heat exchange tube 30 and the first flange 12 are butt welded, the second flange 22 and the lower collecting tube 20 are welded in a saddle manner, and the heat exchange tube 30 and the second flange 22 are butt welded. All of the welds can be subjected to 100% radiographic inspection, which improves the safety performance of the equipment.

The first connector 102 and the second connector 202 each have a large head and a small head. The existing standard parts can be directly welded and fixed to the adjacent upper collecting tube 10 and the lower collecting tube 20. The inner diameter of the inlet end of the first connector 102 is smaller than the inner diameter of the upper collecting tube 10, and the inner diameter of the outlet end of the second connector 202 is smaller than the inner diameter of the lower collecting tube 20. By selecting the first connector 102 and the second connector 202 to replace the spherical head in the prior art, the opening of the containment 8 is as small as possible, so as to ensure the integrity of the containment 8 to the utmost extent.

Two ends of the heat exchange tube bundle are respectively welded and fixedly connected to the upper collecting tube 10 and the lower collecting tube 20, the inlet of the heat exchange pipe 30 is connected with the first through holes 120 and the heat exchange tube steam inlet 100, and the outlet of the heat exchange tube 30 is connected with the second through hole and the condensate return port of the heat exchange tube communicate. Specifically, the heat exchange tube bundle is a C-shaped vertical heat exchange tube bundle, and each heat exchange tube 30 includes an upper inclined section 300, a middle connecting section 302, and a lower inclined section 304. The upper inclined section 300 and the end of the first flange 12 are fixed by butt welding, and the lower inclined section 304 and the end of the second flange 22 are fixed by butt welding.

The upper inclined section 300 and the lower inclined section 304 are inclined slightly downward along the direction of fluid flow, that is, the upper inclined section 300 is slightly inclined downward from the upper collecting tube 10 to the middle connecting section 302, and the lower inclined section 304 is slightly inclined downward from the middle connecting section 302 to the lower collecting tube 20. The inclination angle of the upper inclined section 300 and the lower inclined section 304 (that is, the angle between the heat exchange tube 30 and the horizontal plane) is between 3-15 degree. The middle connecting section 302 is a vertical section.

The frame assembly 40 is welded by a series of section steels, and is mainly used to support and fix the C-shaped vertical heat exchange tube bundle. The upper and lower ends of one side of the frame assembly 40 are respectively welded and fixed to the upper collecting tube 10 and the lower collecting tube 20, and the bottom of the other side is fixed on the concrete support.

The frame assembly 40 also includes a bracket 400 for supporting and fixing the upper collecting tube 10 and another bracket 402 for supporting and fixing the lower collecting tube 20. There are brackets 400 in the frame assembly 40, which are located at the opening end and the closed end of the upper collecting tube 10, respectively. To facilitate fixing, a curved backing plate 401 matching the outer diameter of the upper collecting tube 10 is also provided between the upper collecting tube 10 and the bracket 400, and then being fixed by welding. There are two brackets 402, which are respectively located at the opening end and the closed end of the lower collecting tube 20. In order to facilitate fixing, a curved backing plate matching the outer diameter of the lower collecting tube 20 is also arranged between the lower collecting tube 20 and the bracket 402 (not shown), and then fixed by welding.

The frame assembly 40 is welded with tube bundle support assemblies 50 and 60 for fixing and supporting the C-shaped vertical heat exchange tube bundle, wherein the tube bundle support assembly 50 is welded to the upper part of the frame assembly 40 for fixing and supporting the upper inclined section 300. The tube bundle support assembly 60 is welded to the lower part of the frame assembly 40 to fix and support the lower inclined section 304. The tube bundle support assemblies 50 and 60 are plates defining openings. The upper inclined section 300 and the lower inclined section 304 of the heat exchange tube 30 respectively pass through the openings and are fixed to prevent large-scale vibrations during work.

The manufacturing process of the passive condenser for a nuclear power plant of the present invention is detailed as following:
1) Processing and manufacturing parts according to the sizes of the parts;
2) Assembling the parts;
   a) Welding the upper collecting tube 10, the first connector 102 and the spherical head 104; and welding the lower collecting tube 20, the second connector 202 and the spherical head 204;
   b) Welding the upper collecting tube 10 and the first flange 12, welding the lower collecting tube 20 and the second flange 22;
   c) Welding the frame assembly 40;
   d) Assembling and welding the upper collecting tube 10 and the lower collecting tube 20 to the frame assembly 40;
   e) Assembling and welding the C-shaped heat exchange tube bundle with the first flange 12 and the second flange 22 one by one;
   f) Assembling the tube bundle support assemblies 50 and 60 with the C-shaped heat exchange tube bundle;
3) Non-destructively testing the welds during the assembly process;
4) Performing a hydraulic test on the tube side of the heat exchanger;
5) On condition that steps 3) and 4) meet the actual requirements, packaging is carried out to complete the processing and manufacturing of the passive condenser for a nuclear power plant.

Compared with the prior art, the passive condenser for a nuclear power plant of the present invention has the following advantages:
1) No tube sheet and spherical head are needed. The collecting tube realizes the functions of tube sheet and the spherical head. The collecting tube has a cylindrical structure with uniform stress, few circumferential welds, simple and reliable processing technology, and the forging of the conventional head and the tube sheet are eliminated, thereby reducing the manufacturing cost.
2) The first flange and the second flange are welded to the corresponding collecting tube in a saddle way and the heat exchange tube is welded to the flange. Therefore, the welds can be 100% radiographically inspected, which improves the safety performance of the equipment.
3) The interface connected to the external equipment is small, which reduces the installation holes in the containment and ensures the integrity of the containment to the greatest extent.

## Claims

1. A nuclear power plant comprising a passive condenser and a containment, the passive condenser comprising:
an upper collecting tube (10) defining a plurality of heat exchange tube steam inlets (100) and having an opening end and a closed end, and the opening end being fixedly connected to a first connector (102), the upper collecting tube (10) extending through the containment of the nuclear power plant;
first flanges (12) defining first through holes (120) and being arranged at positions of the heat exchange tube steam inlets (100), the first flanges (12) being fixedly connected to the upper collecting tube (10), with the first through holes (120) being in communication with the heat exchange tube steam inlets (100);
a lower collecting tube (20) defining a plurality of heat exchange tube condensate return ports and having an opening end and a closed end, and the opening end being fixedly connected to a second connector (202), the lower collecting tube (20) extending through the containment of the nuclear power plant;
second flanges (22) defining second through holes and being arranged at positions of the heat exchange tube condensate return ports, the second flanges (22) being fixedly connected to the lower collecting tube (20), with the second through holes being in communication with the heat exchange tube condensate return ports; and
a heat exchange tube bundle comprising a plurality of heat exchange tubes (30), each of the heat exchange tubes (30) comprising an upper inclined section (300), a middle connecting section (302) and a lower inclined section (304), the upper inclined section (300) being fixedly connected to the first flange (12), and the lower inclined section (304) being fixedly connected to the second flange (22).

2. The nuclear power plant according to claim 1, **characterized in that** the first flanges (12) are welded to the upper collecting tube (10) in a saddle way, and the second flanges are welded to the lower collecting tube (20) in a saddle way.

3. The nuclear power plant according to claim 2, **characterized in that** the upper inclined section (300) is fixedly connected to the first flange (12) by butt welding, and the lower inclined section (304) is fixedly connected to the second flange (22) by butt welding.

4. The nuclear power plant according to claim 1, **characterized in that** the upper collecting tube (10) and the lower collecting tube (20) each has a cylindrical structure.

5. The nuclear power plant according to claim 1, **characterized in that** the first connector and the second connector each has a large head and a small head.

6. The nuclear power plant according to claim 1, **characterized in that** the heat exchange tube bundle is a C-shaped vertical heat exchange tube bundle.

7. The nuclear power plant according to claim 1, **characterized in that** an angle between the upper inclined section (300) of the heat exchange tube (30) and a horizontal plane is 3-15 degree, and an angle between the lower inclined section (304) of the heat exchange tube (30) and the horizontal plane is 3-15 degree.

8. The nuclear power plant according to claim 1, further comprising a frame assembly (40) for supporting and fixing the upper collecting tube (10) and the lower collecting tube (20).

9. The nuclear power plant according to claim 8, **characterized in that** the frame assembly (40) is welded with a tube bundle support assembly (50, 60) for fixing and supporting the upper inclined section (300) and the lower inclined section (304) of the heat exchange tube bundle, respectively.

## Patentansprüche

1. Kernkraftwerk, umfassend einen passiven Kondensator und eine Eindämmung, wobei der passive Kondensator Folgendes umfasst:
ein oberes Sammelrohr (10), das eine Vielzahl von Wärmeaustauschrohrdampfeinlässen (100) definiert und ein Öffnungsende und ein geschlossenes Ende aufweist, wobei das Öffnungsende fest mit einem ersten Anschluss (102) verbunden ist, wobei sich das obere Sammelrohr (10) durch die Eindämmung des Kernkraftwerks erstreckt;
erste Flansche (12), die erste Durchgangslöcher (120) definieren und an Positionen der Wärmeaustauschrohrdampfeinlässe (100) angeordnet sind, wobei die ersten Flansche (12) fest mit dem oberen Sammelrohr (10) verbunden sind, wobei die ersten Durchgangslöcher (120) in Kommunikation mit den Wärmeaustauschrohrdampfeinlässen (100) sind;
ein unteres Sammelrohr (20), das eine Vielzahl von Wärmeaustauschrohrkondensatrücklaufports definiert und ein Öffnungsende und ein geschlossenes Ende aufweist, und das Öffnungsende fest mit einem zweiten Anschluss (202) verbunden ist, wobei sich das untere Sammelrohr (20) durch die Eindämmung des Kernkraftwerks erstreckt;
zweite Flansche (22), die zweite Durchgangslöcher definieren und an Positionen der Wärmeaustauschrohrkondensatrücklaufports angeordnet sind, wobei die zweiten Flansche (22) fest mit dem unteren Sammelrohr (20) verbunden sind, wobei die zweiten Durchgangslöcher in Kommunikation mit den Wärmeaustauschrohrkondensatrücklaufports sind; und
ein Wärmeaustauschrohrbündel, das eine Vielzahl von Wärmeaustauschrohren (30) umfasst, wobei jedes der Wärmeaustauschrohre (30) einen oberen geneigten Abschnitt (300), einen mittleren Verbindungsabschnitt (302) und einen unteren geneigten Abschnitt (304) umfasst, wobei der obere geneigte Abschnitt (300) fest mit dem ersten Flansch (12) verbunden ist und der untere geneigte Abschnitt (304) fest mit dem zweiten Flansch (22) verbunden ist.

2. Kernkraftwerk nach Anspruch 1, **dadurch gekennzeichnet, dass** die ersten Flansche (12) sattelförmig mit dem oberen Sammelrohr (10) verschweißt sind und die zweiten Flansche sattelförmig mit dem unteren Sammelrohr (20) verschweißt sind.

3. Kernkraftwerk nach Anspruch 2, **dadurch gekennzeichnet, dass** der obere geneigte Abschnitt (300) durch Stumpfschweißen fest mit dem ersten Flansch (12) verbunden ist und der untere geneigte Abschnitt (304) durch Stumpfschweißen fest mit dem zweiten Flansch (22) verbunden ist.

4. Kernkraftwerk nach Anspruch 1, **dadurch gekennzeichnet, dass** das obere Sammelrohr (10) und das untere Sammelrohr (20) jeweils eine zylindrische Struktur aufweisen.

5. Kernkraftwerk nach Anspruch 1, **dadurch gekennzeichnet, dass** der erste Anschluss und der zweite Anschluss jeweils einen großen Kopf und einen kleinen Kopf aufweisen.

6. Kernkraftwerk nach Anspruch 1, **dadurch gekennzeichnet, dass** das Wärmeaustauschrohrbündel ein C-förmiges vertikales Wärmeaustauschrohrbündel ist.

7. Kernkraftwerk nach Anspruch 1, **dadurch gekennzeichnet, dass** ein Winkel zwischen dem oberen geneigten Abschnitt (300) des Wärmeaustauschrohres (30) und einer horizontalen Ebene 3-15 Grad ist und ein Winkel zwischen dem unteren geneigten Abschnitt (304) des Wärmeaustauschrohres (30) und der horizontalen Ebene 3-15 Grad ist.

8. Kernkraftwerk nach Anspruch 1, ferner umfassend eine Rahmenbaugruppe (40) zum Stützen und Befestigen des oberen Sammelrohres (10) und des unteren Sammelrohres (20).

9. Kernkraftwerk nach Anspruch 8, **dadurch gekennzeichnet, dass** die Rahmenbaugruppe (40) mit einer Rohrbündelstützbaugruppe (50, 60) zum Befestigen und Stützen jeweils des oberen geneigten Abschnittes (300) und des unteren geneigten Abschnittes (304) des Wärmeaustauschrohrbündels verschweißt ist.

## Revendications

1. Centrale nucléaire comprenant
un condenseur passif et une enceinte de confinement, le condenseur passif comprenant :
un tube collecteur supérieur (10) définissant une pluralité d'entrées de vapeur (100) de tube d'échange de chaleur et comportant une extrémité d'ouverture et une extrémité fermée, et l'extrémité d'ouverture étant reliée de manière fixe à un premier raccord (102), le tube collecteur supérieur (10) s'étendant par le confinement de la centrale nucléaire ;
des premières brides (12) définissant des premiers trous traversants (120) et étant agencées au niveau de positions des entrées de vapeur (100) de tube d'échange de chaleur, les premières brides (12) étant reliées de manière fixe au tube collecteur supérieur (10), les trous traversants (120) étant en communication avec les entrées de vapeur (100) de tube d'échange de chaleur ;
un tube collecteur inférieur (20) définissant une pluralité d'orifices de retour de condensat de tube d'échange de chaleur et comportant une extrémité d'ouverture et une extrémité fermée, et l'extrémité d'ouverture étant reliée de manière fixe à un second raccord (202), le tube collecteur inférieur (20) s'étendant à travers l'enceinte de confinement de la centrale nucléaire ;
des secondes brides (22) définissant des seconds trous traversants et étant agencées au niveau de positions des orifices de retour de condensat du tube d'échange de chaleur, les secondes brides (22) étant reliées de manière fixe au tube collecteur inférieur (20), les seconds trous traversants étant en communication avec les orifices de retour de condensat de tube d'échange de chaleur ; et
un faisceau de tubes d'échange de chaleur comprenant une pluralité de tubes d'échange de chaleur (30), chacun des tubes d'échange de chaleur (30) comprenant une section inclinée supérieure (300), une section de raccordement médiane (302) et une section inclinée inférieure (304), la section inclinée supérieure (300) étant reliée de manière fixe à la première bride (12), et la section inclinée inférieure (304) étant reliée de manière fixe à la seconde bride (22).

2. Centrale nucléaire selon la revendication 1, **caractérisée en ce que** les premières brides (12) sont soudées au tube collecteur supérieur (10) dans la manière d'une selle, et les secondes brides sont soudées au tube collecteur inférieur (20) dans la manière d'une selle.

3. Centrale nucléaire selon la revendication 2, **caractérisée en ce que** la section inclinée supérieure (300) est reliée fixement à la première bride (12) par soudage bout à bout, et la section inclinée inférieure (304) est reliée fixement à la seconde bride (22) par soudage bout à bout.

4. Centrale nucléaire selon la revendication 1, **caractérisée en ce que** le tube collecteur supérieur (10) et le tube collecteur inférieur (20) comportent chacun une structure cylindrique.

5. Centrale nucléaire selon la revendication 1, **caractérisée en ce que** le premier raccord et le second raccord comportent chacun une grande tête et une petite tête.

6. Centrale nucléaire selon la revendication 1, **caractérisée en ce que** le faisceau de tubes d'échange de chaleur est un faisceau de tubes d'échange de chaleur vertical en forme de C.

7. Centrale nucléaire selon la revendication 1, **caractérisée en ce qu'**un angle entre la section inclinée supérieure (300) du tube d'échange de chaleur (30) et un plan horizontal est de 3-15 degrés, et un angle entre la section inclinée inférieure (304) du tube d'échange de chaleur (30) et le plan horizontal est de 3-15 degrés.

8. Centrale nucléaire selon la revendication 1, comprenant en outre un ensemble cadre (40) destiné à supporter et fixer le tube collecteur supérieur (10) et le tube collecteur inférieur (20).

9. Centrale nucléaire selon la revendication 8, **caractérisée en ce que** l'ensemble cadre (40) est soudé avec un ensemble de support de faisceau de tubes (50, 60) pour fixer et supporter la section inclinée supérieure (300) et la section inclinée inférieure (304) du faisceau de tubes d'échange de chaleur, respectivement.
